# EUROPEAN PATENT SPECIFICATION

(11) **EP 3 727 005 B1**
(45) Date of publication and mention of the grant of the patent: **26.01.2022**
(21) Application number: 18819162.1
(22) Date of filing: 19.12.2018
(51) Int. Cl.: A23L 25/00, A23D 7/005

(54) **EDIBLE WATER-CONTINUOUS COMPOSITION**
ESSBARE WASSERKONTINUIERLICHE ZUSAMMENSETZUNG
COMPOSITION À PHASE AQUEUSE CONTINUE COMESTIBLE

(30) Priority: 19.12.2017 EP 17208397
(43) Date of publication of application: 28.10.2020
(73) Proprietor: Upfield Europe B.V., 3071 JL Rotterdam (NL)
(72) Inventor: NIJSSE, Jaap, 3071 JL ROTTERDAM (NL); NIEMAN, Gert, 3071 JL ROTTERDAM (NL); AHMADIABHARI, Salomeh, 3071 JL ROTTERDAM (NL)
(74) Representative: EP&C
(86) International application number: PCT/EP2018/085934
(87) International publication number: WO 2019/121976

(56) References cited:
- EP-A1- 1 174 042
- DE-A1- 19 834 925
- DE-U1-202011 002 097
- US-A- 3 567 465
- US-A- 4 515 818
- US-A1- 2008 145 486
- ARUNA VENKTESH ET AL: "FUNCTIONAL PROPERTIES OF THE TOTAL PROTEINS OF SUNFLOWER (HELIANTHUS ANNUUS L.) SEED-EFFECT OF PHYSICAL AND CHEMICAL TREATMENTS", JOURNAL OF AGRICULTURAL AND FOOD CHEMISTRY, AMERICAN CHEMICAL SOCIETY, BOOKS AND JOURNALS DIVISION, vol. 41, no. 1, 1 January 1993 (1993-01-01), pages 18-23, XP000334781, ISSN: 0021-8561, DOI: 10.1021/JF00025A005
- SERGIO GONZÁLEZ-PÉREZ ET AL: "Emulsion Properties of Sunflower ( Helianthus annuus ) Proteins", JOURNAL OF AGRICULTURAL AND FOOD CHEMISTRY, vol. 53, no. 6, 1 March 2005 (2005-03-01), pages 2261-2267, XP055453966, ISSN: 0021-8561, DOI: 10.1021/jf0486388

## Description

### Field of the invention

The present invention relates to an edible water-continuous composition comprising 15-50 wt.%, by weight of the composition, comminuted sunflower seeds. The comminuted sunflower seeds comprise 5-50 wt.% roasted sunflower seeds. The present invention also relates to a method for preparing such an edible water-continuous composition.

### Background of the invention

There is increasing consumer demand for tasty, clean-label, vegan alternatives to dairy spreads. An example of a currently available vegan dairy alternative is Zwergenwiese Streich Natur, which comprises water, raw sunflower seeds and oil. DE 10 2006 037 608 discloses a process for making a vegan diary alternative such as Zwergenwiese.

WO 008121 describes another commercially available dairy alternative sold under the trade name 'Ibi' which typically comprises 20 wt.% comminuted sunflower seeds, 33.3 wt. % water, 0.7 wt.% salt, 40 wt.% oil, 6 wt.% citric acid. However, the Zwergenwiese or Ibi vegan dairy alternatives have a bland flavour, with acrid flavour notes / aftertaste, which hinders widespread market acceptance of such vegan dairy alternatives.

Sun Yum is a sunflower seed based spread that also comprises water, sunflower oil and xanthan gum. Xanthan gum is a stabilizer, added to prevent phase separation, but such additives are not desired by consumers who wish to purchase clean-label products.

US 2015 007246 discloses an edible seed butter comprising comminuted seeds. Example 1 shows method for making a seed butter consisting of 12 ounces of roasted pumpkin seed kernels, 10 ounces of roasted sunflower seeds, 8 ounces of toasted sesame seeds, 5 ounces of honey, 1.25 ounces of grape seed oil, 1 ounce of sunflower seed oil and 0.5 ounces of salt were combined and ground until a smooth consistency resembling traditional peanut butter was achieved. Although such a seed butter has a roasted taste, such seed butters have a cloying texture that is not desirable for many consumers.

EP1174042 describes a spread containing sunflower seeds. The seeds are dehulled and processed raw. Venktesh et al. (J. Agric. Food chem. 41, 1991, 19) researches the effect of various treatments such as roasting on sunflower seeds. Roasted sunflower seeds have less emulsification stability than raw sunflower seeds in water.

US3567465 describes a way of making a creamy smoothy paste with sunflower seeds in oil and sugar. Gonzalez Perez (J. Agric. Food chem. 53, 2005, 2261) investigates emulsion properties of sunflower proteins. They express good emulsification properties, based on sunflower protein isolate and sunflower albumins. DE19834925 describes the use of grinded sunflower seeds in water into which sunflower oil is incorporated to yield a dispersion. DE202011002097 describes a aqueous fermented spread containing 35-45% seeds. US2008/145486 describes a water continuous dispersion with low amoounts of powdered vegetabe matter such as sunflower seeds. US4515818 also describes sunflower butter spread.

There exists a widespread consumer need for vegan versions of diary spreads that have an improved flavour, good mouthfeel and that are resistant to syneresis on storage without additional stabilizers

### Summary of the invention

The inventors of the present invention have surprisingly found that a tasty, clean label vegan product is provided by an edible, water-continuous composition comprising, by weight of the composition,
a. 15-80 wt.% water,
b. 5-50 wt.% comminuted, sunflower seeds,
wherein the comminuted sunflower seeds consists of raw sunflower seeds and roasted sunflower seeds such that 5-50 wt.% of the comminuted sunflower seeds is roasted sunflower seeds.

Surprisingly, a composition comprising comminuted sunflower seeds consisting of 5-50 wt.% roasted seeds confers a water-continuous composition, i.e. a vegan food product, with a creamy mouth feel. In addition, such a food product is stable on storage. Without wishing to be bound by theory, it is proposed that the comminuted, roasted seeds contribute to the good mouth feel and taste, without compromising the overall stability of the composition.

The inventors have also found that a water-continuous composition in which 5-50 wt.% of the sunflower seeds are roasted sunflower seeds, has a pleasant roasted flavour, that lacks an acrid ("raw") aftertaste.

The present invention further relates to a method for the preparation of an edible water-continuous composition, and to the use of comminuted sunflower seeds to stabilize a water-continuous composition comprising roasted sunflower seeds.

The present invention also relates to the use of comminuted raw sunflower seeds as a thermal stabilizer for a water-continuous composition comprising roasted sunflower seeds.

### Detailed description of the invention

In a first aspect, the present invention provides an edible, water-continuous composition comprising,
a. 15-80 wt.% water, by weight of the composition,
b. 5-50 wt.% comminuted, sunflower seeds, by weight of the composition,
wherein the comminuted sunflower seeds consist of raw sunflower seeds and roasted sunflower seeds such that 5-50 wt.% of the comminuted sunflower seeds is roasted sunflower seeds.

The word 'comprising' as used herein is intended to mean 'including' but not 'consisting of' or 'composed of'. In other words, the listed steps or options need not be exhaustive.

Unless specified otherwise, numerical ranges expressed in the format 'from x to y' or 'x-y' are understood to include x and y. When for a specific feature multiple preferred ranges are described in the format 'from x to y' or 'x-y', it is understood that all ranges combining the different endpoints are also contemplated. For the purpose of the invention ambient temperature is defined as a temperature of about 20°C.

Unless indicated otherwise, weight percentages (wt.%) are based on the total weight of the composition.

The water content of the water-continuous composition refers to the total water content, thus including the water that is present within the ingredients, i.e. sunflower seeds.

The term "sunflower seed" as used herein refers to kernels of *Helianthus annuus.* Sunflower seed kernels typically contain, approximately, 48 wt.% lipid (oil), 20 wt.% protein, 20 wt.% carbohydrate, 8 wt.% fibre, 4 wt.% water.

The term "roasted" as used herein refers to sunflower seeds that have been subjected to a heat treatment step of heating in the range of 140-200°C for at least 1 minute.

The term "raw" as used herein refers to sunflower seeds that are in their natural state, i.e. have not been subjected to a roasting treatment.

The term "comminuted" as used herein refers to seeds that have been subjected to a milling, grinding or other crushing step to produce comminuted seeds whereby at least 90 wt.% of the comminuted sunflower seeds pass through a sieve with a mesh size of 2000 µm.

The term "structurant" as used herein refers to a structuring agent. Structuring agents are well known in the field of emulsion technology. A structurant (or structuring agent) may contribute to the structure, texture, stability and appearance of the composition, in particular (edible) water-continuous compositions, and also help provide the physical structure and water retention properties thereof. In the present invention, the structurant can be provided by comminuted, raw and roasted sunflower seeds.

Water-continuous compositions according to the invention encompass dispersions comprising two main phases, a continuous phase and a particulate phase. The particulate phase comprises comminuted sunflower seeds. The continuous phase is water-continuous. Preferably, the water-continuous phase is an oil-in-water emulsion having an oil phase, for example oil present in the sunflower seeds released on comminuting the sunflower seeds, and a water phase. Without wishing to be bound by theory, the inventors propose that the proteins present in the comminuted sunflower seeds emulsifies the oil phase and is further stabilized by the comminuted sunflower seeds.

It will be appreciated that the amount of structuring provided by the comminuted sunflower seeds necessary for imparting structure depends on the total amount of oil phase and the desired structure. For a stable, spreadable consistency a certain amount of sunflower seeds is necessary. If the amount of sunflower seeds is too low, a stable composition may not be obtained and the resulting composition may suffer from syneresis.

We have found that it is possible to obtain a composition having a pleasant roasted taste while maintaining an acceptable structure, e.g. plasticity, and organoleptic properties, e.g. good mouthfeel, when 5-50 wt.% of the comminuted sunflower seeds are roasted sunflower seeds. We have found that a relative high amount of roasted seeds can be incorporated to impart desirable flavour characteristics without adversely affecting spread stability and structure.

The composition according to the present invention comprises comminuted sunflower seeds. The sunflower seeds can be comminuted using size reduction techniques known in the art. Preferably, comminution is carried out by milling, cutting, grinding or a combination thereof.

Comminution can be carried out on dry or wet sunflower seeds. Alternatively, comminution process can be carried out whilst the sunflower seeds are dispersed in a suitable liquid. Such wet comminution may for instance be carried out in water, oil, or mixtures thereof.

According to a preferred embodiment of the invention, at least 90 wt.% of the comminuted sunflower seeds pass through a sieve with a mesh size of 2000 µm. Preferably at least 90 wt.% of the comminuted sunflower seeds passes a sieve with a mesh size of 1000 µm. More preferably at least 90 wt.% of the comminuted sunflower seeds pass through a sieve with a mesh size of 500 µm. If too many of the comminuted sunflower seed particles are too large, they are likely to lead to a grainy/gritty mouthfeel upon consumption of the composition.

Accordingly, the comminuted sunflower seeds have a particle size distribution with a D₉₀ less than 2000 µm preferably less than 1000 µm.

Preferably, the comminuted sunflower seeds have a particle size distribution with a ;D₅₀ less than 1000 µm.

"D10" "D50" and "D90" as used herein refer to the particle size distributions of the sunflower seeds. For example, the "D10" is the diameter at which 10% of the sample's mass is comprised of particles with a diameter less than this value. The "D50" is the diameter of the particle that 50% of a sample's mass is smaller than and 50% of a sample's mass is larger than.

"D10" "D50" and "D90" can be measured by sieves or by light scattering. The method is known to the skilled person and is commonly used to determine particle size distribution of seed particles.

The comminuted sunflower seeds can be suitably visualized in the composition by means of XRT (X-ray micro computed tomography, also known as micro-CT) or SEM (scanning electron microscopy).

In a preferred embodiment, the edible, water-continuous composition according to the invention comprises 2-80 wt.%, edible oil, preferably 10-70 wt.% edible oil, more preferably 20-60 wt.% edible oil, by weight of the composition.

The term "edible oil" as used herein refers to oil present in the composition, which oil may be present in the comminuted sunflower seeds or exogenous oil that is additional to the endogenous sunflower seed oil.

The term "oil" as used herein refers to lipids selected from triglycerides, diglycerides, monoglycerides and combinations thereof. Preferably the oil in the context of this invention comprises at least 90 wt.% of triglycerides, more preferably at least 95 wt.%. Preferably the oil contains less than 20 wt.% of solid oil at 5°C, preferably less than 10 wt.% solid oil. More preferred the oil is free from solid oil at 5°C. Most preferred the oil is liquid at 5°C.

Preferred oils for use in the context of this invention are vegetable oils, bean oil, olive oils, seed oils and nut oils which are liquid at 5°C. Preferably the oil comprises almond oil, coconut oil, cottonseed oil, hazelnut oil, maize oil, olive oil, palm oil, palm kernel oil, pumpkin oil, rapeseed oil, soybean oil, sunflower oil, linseed oil, and combinations of these oils. Preferably the edible oil is sunflower, linseed or pumpkin oil. The mono-unsaturated fatty acids as comprised in the oil preferably comprises oleic acid. The poly-unsaturated fatty acids as comprised in the oil preferably comprise linoleic acid and linolenic acid.

Preferably, the edible oil has a solid fat content at 20°C (N₂₀) of 0-15% and a liquid oil content at 20°C that equals 100% - N₂₀.

The edible oil in the composition more preferably has a solid fat content at 20°C (N₂₀) of less than 10%, even more preferably a N₂₀ of less than 5% and most preferably a N₂₀ of 0%.

The edible oil in the composition preferably has a solid fat content at 35 °C (N₃₅) of less than 5%, more preferably a N₃₅ of less than 3% and most preferably a N₃₅ of 0%.

Preferably the composition of the invention comprises from 5% to 80% by weight of edible oil, preferably from 10% to 70% by weight, preferably from 15% to 60% by weight even more preferably 20 to 50 wt.% of oil. Preferably the amount of oil is at least 10% by weight, preferably at least 20% by weight, preferably at least 30% by weight. Preferably the concentration of edible oil is maximally 75% by weight, preferably maximally 70% by weight, preferably maximally 65%.

Any combination of ranges using these mentioned end points are considered to be part of the invention as well.

Preferably the composition is in the form of an oil-in-water emulsion. Preferably the composition is an edible emulsion. Examples of oil-in-water emulsions encompassed by the present invention include mayonnaise, dressings, salad dressings, spreads and sauces.

The ratio of dry matter (comminuted sunflower seeds) by weight to the oil phase, lies within the range of 2:1 to 0.1:1. More preferably, said weight ratio in the composition lies within the range of 1.8 to 0.5:1.

The composition preferably comprises 30-70 wt.% water, by weight of the composition, preferably 40 to 60 wt.%, even more preferably 45-55 wt.%.

The composition contains a mixture of raw and roasted sunflower seeds. Preferably the composition comprises 10-40 wt.% raw sunflower seeds by weight of composition, preferably 20-30 wt.% raw sunflower seeds,

Preferably, the composition comprises, based on the total amount of raw and roasted sunflower seeds, 10-75 wt.% roasted sunflower seeds, preferably 15-50 wt.%, more preferably 20-30 wt.%, most preferably 25-40 wt.% roasted sunflower seeds.

Preferably, the ratio of roasted sunflower seeds to raw sunflower seeds is in the range of 1:2 to 1:8, preferably 1:3 to 1:7, more preferably 1:4 to 1:6.

Preferably the composition has a pH at 25 °C ranging from 2 to 6, preferably ranging from 3 to 5, more preferred from 3.5 to 4.5. Preferably, this pH is obtained by using an organic acid. Preferably the organic acid is selected from the group consisting of acetic acid, citric acid, lactic acid or a combination of two or more thereof.

The organic acid may, in some preferred embodiments, be provided by a source of organic acid. Preferably, the source of organic acid is a foodstuff. Suitable sources of organic acid include citrus fruit juices and vinegar. For example, lemon juice is a preferred source of citric acid.

In a preferred embodiment, the composition has a roasted taste and stable oil droplets, the oil droplets having a D3,3 between 2-10 µm, preferably between 3-8 µm as measured by 1H-NMR.

Preferably, the oil droplets present in the composition of the invention have a volume weighted mean droplet size D3,3 of less than 10 µm, preferably ranging from 0.3 to 10 µm, preferably ranging from 0.5 to 8 µm. This mean diameter may suitably be determined using the method described by Goudappel et al. (Journal of Colloid and Interface Science 239, p. 535-542, 2001). Preferably, 80 to 100% of the total volume of the oil droplets contained in the present emulsion have a diameter of less than 15 µm, more preferably a diameter ranging from 0.5 to 10 µm.

Preferably, the edible, water-continuous composition comprises:
a) 25-60 wt.%, by weight of the composition, water,
b) 10-35 wt.% by weight of the composition comminuted, raw sunflower seeds,
c) 5-15 wt.%, by weight of the composition, comminuted, roasted sunflower seeds,
d) 15-50 wt.%, by weight of the composition, edible oil.

In preferred embodiment, the edible, water-continuous composition comprises 30-55 wt.% comminuted sunflower seeds, wherein the comminuted sunflower seeds consists of 60-80 wt.%, by weight of sunflower seeds, raw sunflower seeds and 20-40 wt.% roasted sunflower seeds.

Preferably, the edible, water-continuous composition comprises:
a) 40-60 wt.%, by weight of the composition, water,
b) 20-35 wt.% by weight of the composition comminuted, raw sunflower seeds,
c) 5-15 wt.%, by weight of the composition, comminuted, roasted sunflower seeds,
d) 15-30 wt.%, by weight of the composition, edible oil.

In preferred embodiment, the edible, water-continuous composition comprises 30-55 wt.% comminuted sunflower seeds, wherein the comminuted sunflower seeds consists of 60-80 wt.%, by weight of sunflower seeds, raw sunflower seeds and 20-40 wt.% roasted sunflower seeds.

Preferably, the edible, water-continuous composition comprises:
a) 20-40 wt.%, by weight of the composition, water,
b) 7-20 wt.% by weight of the composition comminuted, raw sunflower seeds,
c) 2-10 wt.%, by weight of the composition, comminuted, roasted sunflower seeds,
d) 40-70 wt.%, by weight of the composition, edible oil.

In preferred embodiment, the edible, water-continuous composition comprises 10-30 wt.% comminuted sunflower seeds, wherein the comminuted sunflower seeds consists of 60-80 wt.%, by weight of sunflower seeds, raw sunflower seeds and 20-40 wt.% roasted sunflower seeds.

The composition of the invention may suitably contain one or more additional ingredients. Examples of such optional ingredients include salt, spices, sugars (in particular mono and/or disaccharides), edible acids such as citric acid and lactic acid, mustard, vitamins, flavouring, colouring, preservatives, antioxidants, herbs and vegetable pieces. Preferably, such optional additives collectively do not make up more than 40%, more preferably not more than 20% by weight of the composition.

The embodiments that have been described herein before in the context of the composition of the invention equally apply to this method, according to the invention, for the preparation of such a composition.

Preferably, the edible water-continuous composition is obtainable by a process comprising the step of mixing 5-50 wt.% comminuted, raw sunflower seeds with 2-25 wt.% comminuted, roasted sunflower seeds with 15-80 wt.% water and optionally 2-80 wt.% oil.

In a second aspect, the present invention relates to a method for the preparation of an edible water-continuous composition, comprising the steps of:
i) comminuting 5-50 parts by weight raw sunflower seeds and 2-25 parts by weight roasted sunflower seeds in the presence of 15-80 parts by weight water to provide a dispersion of comminuted raw and roasted sunflower seeds in water,
ii) optionally providing 2-80 parts by weight oil together with the other ingredients of step i) or mixed in to the resultant dispersion provided by step i).

Preferably, 10-40 parts by weight raw sunflower seeds, more preferably 20-30 parts by weight raw sunflower seeds are provided in step i). Preferably 2-20 parts by weight roasted sunflower seeds, more preferably 5-15 parts by weight roasted sunflower seeds are provided in step i).

Preferably, 20-70 parts by weight water, more preferably 30-60 parts by weight water are provided in step i).

Preferably 2-70 parts by weight oil, more preferably 5-60 parts by weight, even more preferably 10-50 parts by weight, most preferably 20-30 parts by weight oil are provided in step i) or step ii).

In a preferred embodiment, step i) is carried out a temperature between 15 and 105 °C, preferably between 15 and 35 °C. It has been found that the organoleptic properties of the composition according to the invention can be affected by the temperature at which the sunflower seeds are comminuted. Preferably, the sunflower seeds are comminuted at a temperature of between 15 and 35 °C. Without wishing to be bound by theory, comminution carried out between 15 and 35 °C has been found to produce a finer particle size and better dispersion of protein which advantageously provides a particularly stable composition.

There is a preference for carrying out step i) by grinding the raw and roasted seeds together. It has been found that the dispersion is perceived to be more smooth

Preferably, the method of the invention produces the composition according to the invention as described herein before.

The composition that is produced by the present method is preferably filled into a container (e.g. a jar or tub), a pouch or a sachet.

In another aspect, the present invention relates to the use of comminuted sunflower seeds consisting of 5-50 wt.% roasted sunflower seeds and 25-95wt.% raw sunflower seeds as a structurant (or structuring agent) for edible water-continuous compositions. The inventors have found that the combination of raw and roasted comminuted raw sunflower seeds provides a natural means to provide stable water-continuous compositions having a pleasant, creamy texture, which meet the consumer need for vegan alternative spreads.

### DESCRIPTION OF FIGURES

Figure 1 is a cryo-SEM image of an aspect of a raw sunflower seed particle in a comminuted sunflower seed composition.
Figure 2 shows a schematic presentation of the cryo-SEM raw sunflower seed particle of Figure 1. Legend: 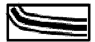 Cell wall 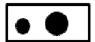 Oil droplets 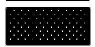 Aggregated oil 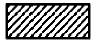 Protein body
Figure 3 is a cryo-SEM image of an aspect of a roasted sunflower seed particle in a comminuted sunflower seed composition.
Figure 4 shows a schematic presentation of the cryo-SEM roasted sunflower seed particle of Figure 3. Legend: 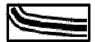 Cell wall 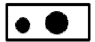 Oil droplets 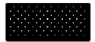 Aggregated oil 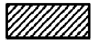 Protein body 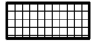 Oil continuous protein body

### Examples

### General procedures

### Firmness

To determine the firmness of the end products, the storage modulus modulus (G') was measured by a Modular Compact Rheometer 302 (manufacturer Anton Paar GmbH, Graz, Austria). A parallel plate system was used having a probe diameter of 25 mm. A sample was taken directly from the fridge (stored at 5°C) and a spoon was used to put about 15 grams of the sample material on the platform. Gap was set at 4 mm. Strain was set at 0.01%, frequency at 1HZ and temperature at 20°C. G' was recorded after 120 seconds.

### Oil droplet size

To determine the oil droplet sizes, a Bruker minispec mq 20 instrument (Bruker Corporation, Billerica, Massachusetts, USA) was used, according to the method of Goudappel et al, 2001. An aliquot of the sample was gently injected into a 10 mm outside diameter NMR tube to fill the tube to 1cm filling height. The filled tube was put in the measurement case of the instrument, and the D_{3,3} oil droplet size was recorded.

### Imaging

### Cryo Scanning Electron Microscopy (SEM)

A tiny volume of each sample (one droplet) was placed on top of a rivet and plunge-frozen in melting ethane. The sample was cryo-planed using a cryo-ultramicrotome (Leica Ultracut UCT EM FC7), to obtain a freshly prepared cross-section. Cryo-planing (Nijsse and van Aelst, 1999, Scanning 21(6): 372-378) was done first with section thickness of 100 nm and a speed of 60 mm/sec using a glass knife. The last sections were made at decreasing thickness, down to 20 nm, and down to a speed of 1 mm/sec using a diamond knife (Diatome histocryo 6 mm) all at - 110 °C.

The rivet was mounted onto a SEM holder and transferred into a Gatan Alto2500 preparation chamber. To reveal the microstructures just under the planed surface, the temperature of the sample was increased for a short while to -90°C to remove a thin layer of ice by sublimation. This yielded a 3D view on the planed sample. The sample was sputter coated with platinum (30 sec) for a better SEM contrast and to prevent charging by the electron beam. The sample was imaged using a Zeiss Auriga field-emission SEM at -125°C and an accelerating voltage of 3 kV. Two secondary electron detectors were used. The Everhart-Thornley detector (ET) in the microscope chamber, which provided images with high topographical contrast, and the In-Lens detector, which provided high edge contrast, which in case of the current study provided a quasi-compositional contrast (oil and other non-aqueous structures: black, other material: white and grey).

Characteristic X-rays were used to identify the composition and measure the local abundance of elements in samples. The detection of X-rays was performed by an Energy Dispersive X-ray Detector (SEM-EDX, Oxford Max 80 mm2) and Aztec software. Accelerating voltage of 10 kV was used.

A notable difference was found between sunflower seed particles that had been roasted and sunflower seed particles that been added raw. This difference was present despite the pasteurization treatment which all particles had undergone during manufacturing of the spreads.

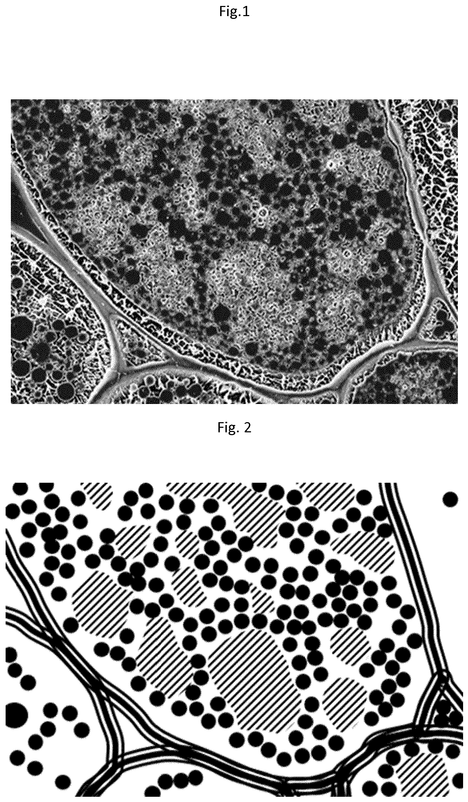

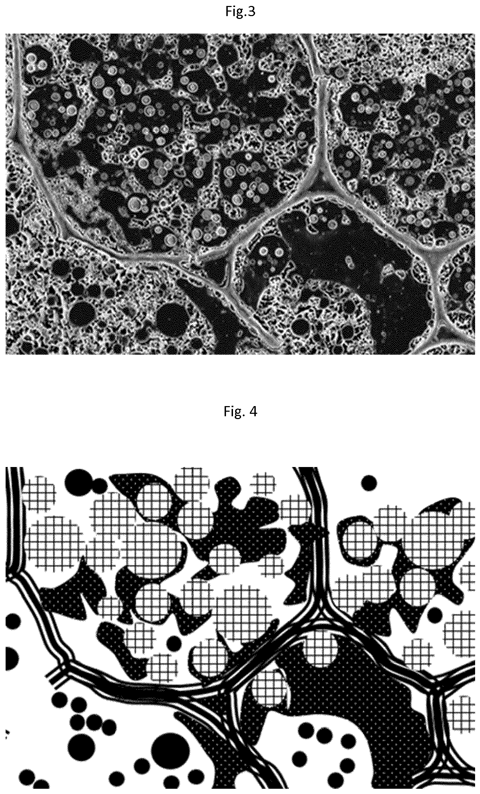

Figure 1 is a cryo-SEM image of an aspect of a raw sunflower seed particle in a comminuted sunflower seed composition. Figure 3 is a cryo-SEM image of an aspect of a roasted sunflower seed particle in a comminuted sunflower seed composition. The cells of a raw particle show a clear separation of protein bodies and individual small oil droplets. The cells of a roasted particle show largely aggregated oil, which apparently has infused the protein bodies, resulting in oil continuous protein bodies with voids.

Figure 2 is a schematic representation of Figure 1, where structures have been classified as indicated in the legend. Similarly, Figure 4 is a schematic representation of Figure 3.

### Example 1

Table 1 General formulation of edible water-continuous compositions tested.

**Table 1**

| **Ingredient** | **Quantity in % (w/w)** | | |
|---|---|---|---|
| | **Sample 1** | **Sample 2** | **Sample 3** |
| Water | 58.4 | 48.6 | 28.8 |
| Roasted sunflower seed kernels | 10 | 7.5 | 5 |
| Raw sunflower seed kernels | 30 | 22.5 | 15 |
| Refined sunflower seed oil | 0 | 20.0 | 50 |
| Citric acid | 0.85 | 0.65 | 0.45 |
| Sodium chloride | 0.7 | 0.7 | 0.7 |
| Potassium sorbate | 0.1 | 0.1 | 0.1 |

Raw seed kernels were dehulled sunflower seeds, obtained from www.pit-pit.com.

Roasting was performed using a Philips Avance Airfryer XL. A metal wired sieve with 250µm sized openings (Retsch, Germany) was clamped in the Air Fryer basket to prevent the seeds from falling through the coarse wiring of the frying basket. Roasted seed kernels were obtained by roasting 300 gram raw seeds in the Airfryer, at 180°C during 8 minutes. Seeds were quickly stirred halfway the roasting process. After roasting, the seeds were spread on paper towel to allow cooling down to room temperature.

The samples were prepared in a Thermomix TM31 device as follows:
- Sodium Chloride and Potassium Sorbate were dissolved in the water.
- Seeds and oil were added and the rotation speed of the blade was set to max (10) without heating, for 6 minutes.
- A Thermomix wall scraper was inserted
- Citric acid was added. Rotation speed was set at 4 and temperature was set at 90°C.
- Once 90°C was reached, stirring at speed 4 was continued for 7 min.
- The hot spread was scooped into a heat-resistant piping bag, and therewith piped into 200ml glass jars.
- The filled jars were allowed to cool down and were stored in a refrigerator until further analysis.

### Example 2

Samples with different ratios of roasted seeds vs raw seeds, according to the method described in Example 1.

**Table 2**

| **Ingredient** | **Comp A** | **Sample 2** | **Comp B** |
|---|---|---|---|
| Water | 48.6 | 48.6 | 48.6 |
| Roasted sunflower seed kernels | 30 | 7.5 | - |
| Raw sunflower seed kernels | - | 22.5 | 30 |
| Refined sunflower seed oil | 20.0 | 20.0 | 20.0 |
| Citric acid | 0.65 | 0.65 | 0.65 |
| Sodium chloride | 0.7 | 0.7 | 0.7 |
| Potassium sorbate | 0.1 | 0.1 | 0.1 |

**Table 3**

| | **Comp A** | **Sample 2** | **Comp B** |
|---|---|---|---|
| Roasted taste | 5 | 4 | 0 |
| Acrid aftertaste | - | - | + |
| Creamy mouthfeel | - | ++ | + |
| Stability (D3,3 in µm) | >>10 | 3,7 | 2.2 |
| Firmness (Elastic Modulus in Pa) | N.M* | 12339 | 14695 |

| | | | |
|---|---|---|---|
| *N.M.: not measurable | | | |

Taste and mouthfeel was assessed by a taste panel. Roasted taste was assessed on a 5 point scale, whereby 5 indicated a strong roasted taste and 0 no roasted taste. The samples were also evaluated for the lingering, acrid aftertaste that is characteristic for raw sunflower seeds. Unexpectedly, sample 2 was found to lack the acrid aftertaste, which is a dominant characteristic of comparative example B. The mouthfeel of the samples was also assessed and sample 2 was found to have the creamiest mouthfeel. Comparative example B was less creamy than sample 2 and comparative sample A was not creamy but rather had a cloying texture. Comparative sample A is an unstable sunflower seed emulsion, which was not amenable to firmness measurement due to oil separation. Comparative sample B shows a stable sunflower seed emulsion that lacks the appealing taste of roasted sunflower seeds.

Sample 2 is a stable composition, essentially free of syneresis, with the appealing taste of roasted sunflower seeds, and this roasted taste is not hindered by a significant presence of raw seeds.

### Example 3

This example was performed like example 2, now without additional oil:

**Table 4**

| **Ingredient** | **Quantity in % (w/w)** | | |
|---|---|---|---|
| | **Comp C** | **Sample 4** | **Comp D** |
| Water | 58.4 | 58.4 | 58.4 |
| Roasted sunflower seed kernels | 40 | 10 | - |
| Raw sunflower seed kernels | - | 30 | 40 |
| Refined sunflower seed oil | - | - | - |
| Citric acid | 0.85 | 0.85 | 0.85 |
| Sodium chloride | 0.7 | 0.7 | 0.7 |
| Potassium sorbate | 0.1 | 0.1 | 0.1 |

**Table 5**

| | **Comp C** | **Sample 4** | **Comp D** |
|---|---|---|---|
| Roasted taste | 5 | 4 | 0 |
| Acrid aftertaste | - | - | + |
| Creamy mouthfeel | - | ++ | - |
| Stability (D3,3 in µm) | >>10 | 3.98 | 2.19 |
| Firmness (Elastic Modulus in Pa) | N.M. | 17980 | 20947 |

| | | | |
|---|---|---|---|
| *N.M.: not measurable | | | |

Comparative sample C is an unstable sunflower seed emulsion, indicating that structuring was not complete when applying roasted seeds only. Firmness could not be measured.

Comparative sample D shows a stable sunflower seed emulsion that lacks the appealing taste of roasted sunflower seeds and is dominated by an acrid aftertaste.

Sample 4 is a stable composition with the appealing taste of roasted sunflower seeds, and this roasted taste is not hindered by a significant presence of raw seeds, and also has a creamy mouthfeel.

### Example 4

Comparative sample F is an oil continuous seed spread, consisting of roasted sunflower seeds.

| **Ingredient** | **Quantity in % (w/w)** |
|---|---|
| Roasted sunflower seed kernels | 79.5 |
| Honey | 13.2 |
| Refined sunflower seed oil | 6.0 |
| Sodium chloride | 1.3 |

This comparative sample F was prepared in a Thermomix TM31 device as follows:
- All seeds were roasted as described in Example 1
- Seeds and salt were added into Thermomix vessel and grinded at speed 5 during 20 minutes. No heating was applied
   ∘ After 10 minutes of the grinding, the oil was added.
   ∘ After 15 minutes of the grinding, the honey was added.

This comparative sample F shows a straightforward method to create a stable oil continuous spread using all roasted sunflower seeds, being a stable product. However, the product has an undesirable cloying texture compared to the products according to the invention.

### Example 5.

The ratio's of raw v.s. roasted seeds were varied in the composition as defined in Example 3. Samples were prepared containing 5%, 10%, 25 and 35% roasted seeds (on 100% seeds (comminuted raw and roasted). The samples varied in firmness (G'- value) and roasting flavour, but all produced stable products.

| Sample code | Roasted seeds | G' | D3,3 | Roasting flavour | pH |
|---|---|---|---|---|---|
| Comparative (100% raw seeds) | 0 | 14695 | 2.22 | 0 | 4,58 |
| A | 5% | 14953 | 2,14 | 1 | 4,55 |
| B | 10% | 13588 | 2,78 | 2 | 4,55 |
| C | 25% | 12339 | 3,73 | 4 | 4,64 |
| D | 35% | ND | ND | 4 | ND |

## Claims

1. An edible, water-continuous composition comprising,
a. 15-80 wt.% water, by weight of the composition,
b. 5-50 wt.% comminuted, sunflower seeds, by weight of the composition,
wherein the comminuted sunflower seeds consist of raw sunflower seeds and roasted sunflower seeds such that 5-50 wt.% of the comminuted sunflower seeds is roasted sunflower seeds.

2. Edible, water-continuous composition according any one of the preceding claims, at least 90 wt.% of the comminuted sunflower seeds pass through a sieve with a mesh size of 2000 µm.

3. Edible, water-continuous composition, according to claim 1, comprising 2-80 wt.% edible oil, by weight of the composition, preferably a seed oil or nut oil, preferably a seed oil, even more preferably sunflower oil.

4. Edible, water-continuous composition according to any one of the preceding claims, comprising 30-70 wt.%, by weight of the composition, water, preferably 40-60 wt.%, even more preferably 45-55 wt.%.

5. Edible, water-continuous composition according to any one of the preceding claims, comprising 10-40 wt.%, by weight of composition, raw sunflower seeds preferably 20-30 wt.% raw sunflower seeds.

6. Edible, water-continuous composition according to any one of the preceding claims, comprising, based on the total amount of raw and roasted sunflower seeds, 5-45 wt.% roasted sunflower seeds, preferably 7.5-40 wt.%, most preferably 10-30 wt.% roasted sunflower seeds.

7. Edible, water-continuous composition according to any one of the preceding claims, wherein the ratio of roasted sunflower seeds to raw sunflower seeds is in the range of 1:2 to 1:10, preferably 1:3 to 1:8.

8. Edible, water-continuous composition according to any one of the preceding claims, comprising an acid selected from the group consisting of acetic acid, citric acid, lactic acid or a combination of two or more thereof, said acid providing a pH in the range of 2-6, preferably in the range of 3-5.

9. Edible, water-continuous composition according to any one of the preceding claims, being a spread having a roasted taste and stable oil droplets, the oil droplets having a volume weighted mean droplet size between 2 and 10 µm, preferably between 3 and 8 µm, as measured by ¹H-NMR.

10. Edible, water-continuous composition according to any one of the preceding claims, comprising:
a) 25-60 wt.%, by weight of the composition, water,
b) 10-35 wt.% by weight of the composition comminuted, raw sunflower seeds,
c) 5-15 wt.%, by weight of the composition, comminuted, roasted sunflower seeds,
d) 15-50 wt.%, by weight of the composition, edible oil.

11. Edible water-composition according to any one of the preceding claims obtainable by a process comprising the step of mixing 5-50 wt.% comminuted, raw sunflower seeds and 2-25 wt.% comminuted, roasted sunflower seeds with 15-80 wt.% water and optionally 2-80 wt.%.

12. Method for the preparation of an edible water-continuous composition according to any one of the claims 1-7, comprising the steps of:
i) grinding 5-50 wt.% raw sunflower seeds and 2-25 wt.% roasted sunflower seeds,
ii) mixing the comminuted sunflower seeds of step i) with 15-80 wt.% water, to provide a dispersion of comminuted raw and roasted sunflower seeds in water,
iii) optionally adding 2-80 wt.% oil before or after step i) or ii)).

13. Method according to claim 12, wherein step ii) and/or step iii) is carried out simultaneously with step i).

14. Method according to claim 12 or 13, wherein step i) is carried out at temperature between 15 and 105 °C, preferably between 15 and 35 °C.

15. Use of comminuted, raw and roasted sunflower seeds as a structurant for edible water-continuous compositions.

## Patentansprüche

1. Essbare, wasserkontinuierliche Zusammensetzung, umfassend:
a. zu 15-80 Gew.-% der Zusammensetzung Wasser,
b. zu 5-50 Gew.-% der Zusammensetzung zerkleinerte Sonnenblumenkerne, wobei die zerkleinerten Sonnenblumenkerne aus unbehandelten Sonnenblumenkernen und gerösteten Sonnenblumenkernen bestehen, sodass 5-50 Gew.-% der zerkleinerten Sonnenblumenkerne geröstete Sonnenblumenkerne sind.

2. Essbare, wasserkontinuierliche Zusammensetzung nach einem der vorstehenden Ansprüche, wobei mindestens 90 Gew.-% der zerkleinerten Sonnenblumenkerne ein Sieb mit einer Maschengröße von 2.000 µm passieren.

3. Essbare, wasserkontinuierliche Zusammensetzung nach Anspruch 1, umfassend zu 2-80 Gew.-% der Zusammensetzung Speiseöl, vorzugsweise ein Keimöl oder Nussöl, vorzugsweise ein Keimöl, noch bevorzugter Sonnenblumenöl.

4. Essbare, wasserkontinuierliche Zusammensetzung nach einem der vorstehenden Ansprüche, umfassend zu 30-70 Gew.-% der Zusammensetzung Wasser, vorzugsweise zu 40-60 Gew.-%, noch bevorzugter zu 45-55 Gew.-%.

5. Essbare, wasserkontinuierliche Zusammensetzung nach einem der vorstehenden Ansprüche, umfassend zu 10-40 Gew.-% der Zusammensetzung unbehandelte Sonnenblumenkerne, vorzugsweise zu 20-30 Gew.-% unbehandelte Sonnenblumenkerne.

6. Essbare, wasserkontinuierliche Zusammensetzung nach einem der vorstehenden Ansprüche, umfassend 5-45 Gew.-% geröstete Sonnenblumenkerne, vorzugsweise 7,5-40 Gew.-%, besonders bevorzugt 10-30 Gew.-% geröstete Sonnenblumenkerne, bezogen auf das Gesamtgewicht der unbehandelten und gerösteten Sonnenblumenkerne.

7. Essbare, wasserkontinuierliche Zusammensetzung nach einem der vorstehenden Ansprüche, wobei das Verhältnis von gerösteten Sonnenblumenkernen zu unbehandelten Sonnenblumenkernen im Bereich von 1:2 bis 1:10, vorzugsweise 1:3 bis 1:8 liegt.

8. Essbare, wasserkontinuierliche Zusammensetzung nach einem der vorstehenden Ansprüche, umfassend eine Säure, die ausgewählt ist aus der Gruppe, bestehend aus Essigsäure, Zitronensäure, Milchsäure oder einer Kombination von zwei oder mehr davon, wobei die Säure einen pH-Wert im Bereich von 2-6, vorzugsweise im Bereich von 3-5 bereitstellt.

9. Essbare, wasserkontinuierliche Zusammensetzung nach einem der vorstehenden Ansprüche, die ein Aufstrich ist, der einen Röstgeschmack und stabile Öltröpfchen aufweist, wobei die Öltröpfchen eine volumengewichtete mittlere Tröpfchengröße zwischen 2 und 10 µm, vorzugsweise zwischen 3 und 8 µm, wie mittels ¹H-NMR gemessen, aufweisen.

10. Essbare, wasserkontinuierliche Zusammensetzung nach einem der vorstehenden Ansprüche, umfassend:
a) zu 25-60 Gew.-% der Zusammensetzung Wasser,
b) zu 10-35 Gew.-% der Zusammensetzung zerkleinerte, unbehandelte Sonnenblumenkerne,
c) zu 5-15 Gew.-% der Zusammensetzung zerkleinerte, geröstete Sonnenblumenkerne,
d) zu 15-50 Gew.-% der Zusammensetzung Speiseöl.

11. Essbare, wasserkontinuierliche Zusammensetzung nach einem der vorstehenden Ansprüche, erhältlich durch einen Prozess, der den Schritt des Mischens von 5-50 Gew.-% zerkleinerten, unbehandelten Sonnenblumenkernen und 2-25 Gew.-% zerkleinerten, gerösteten Sonnenblumenkernen mit 15-80 Gew.-% und wahlweise 2-80 Gew.-% Wasser umfasst.

12. Verfahren zum Herstellen einer essbaren, wasserkontinuierlichen Zusammensetzung nach einem der Ansprüche 1-7, das die folgenden Schritte umfasst:
i) Mahlen von 5-50 Gew.-% unbehandelten Sonnenblumenkernen und 2-25 Gew.-% gerösteten Sonnenblumenkernen,
ii) Mischen der zerkleinerten Sonnenblumenkerne von Schritt i) mit 15-80 Gew.-% Wasser, um eine Dispersion zerkleinerter unbehandelter und gerösteter Sonnenblumenkerne in Wasser bereitzustellen,
iii) wahlweise Zusetzen von 2-80 Gew.-% Öl vor oder nach Schritt i) oder ii).

13. Verfahren nach Anspruch 12, wobei Schritt ii) und/oder Schritt iii) gleichzeitig mit Schritt i) durchgeführt wird.

14. Verfahren nach Anspruch 12 oder 13, wobei Schritt i) bei einer Temperatur zwischen 15 und 105 °C, vorzugsweise zwischen 15 und 35°C durchgeführt wird.

15. Verwendung zerkleinerter unbehandelter und gerösteter Sonnenblumenkerne als Strukturgeber für essbare wasserkontinuierliche Zusammensetzungen.

## Revendications

1. Composition alimentaire à phase aqueuse continue comprenant,
a. 15 à 80 % en poids d'eau, par rapport au poids de la composition,
b. 5-50 % en poids de graines de tournesol broyées, par rapport au poids de la composition, dans lequel les graines de tournesol broyées sont constituées de graines de tournesol crues et de graines de tournesol grillées de telle sorte que 5 à 50 % en poids des graines de tournesol broyées sont des graines de tournesol grillées.

2. Composition alimentaire à phase aqueuse continue selon l'une quelconque des revendications précédentes, au moins 90 % en poids des graines de tournesol broyées passent à travers un tamis de maille de 2000 µm.

3. Composition alimentaire à phase aqueuse continue selon la revendication 1, comprenant 2 à 80 % en poids d'huile alimentaire, par rapport au poids de la composition, de préférence une huile de graines ou de noix, de préférence une huile de graines, encore plus préférentiellement de l'huile de tournesol.

4. Composition alimentaire continue dans l'eau selon l'une quelconque des revendications précédentes, comprenant 30 à 70 % en poids d'eau, par rapport au poids de la composition, de préférence 40 à 60 % en poids, encore plus préférentiellement 45 à 55 % en poids.

5. Composition alimentaire à phase aqueuse continue selon l'une quelconque des revendications précédentes, comprenant 10 à 40 % en poids, par rapport au poids de la composition, de graines de tournesol crues, de préférence 20 à 30 % en poids de graines de tournesol crues.

6. Composition alimentaire à phase aqueuse continue selon l'une quelconque des revendications précédentes, comprenant, par rapport à la quantité totale de graines de tournesol crues et grillées, 5 à 45 % en poids de graines de tournesol grillées, de préférence 7,5 à 40 % en poids, plus préférablement 10-30 % en poids de graines de tournesol grillées.

7. Composition alimentaire à phase aqueuse continue selon l'une quelconque des revendications précédentes, dans laquelle le rapport des graines de tournesol grillées sur graines de tournesol crues est compris dans la plage de 1:2 à 1:10, de préférence compris entre 1:3 à 1:8.

8. Composition alimentaire à phase aqueuse continue selon l'une quelconque des revendications précédentes, comprenant un acide choisi dans le groupe constitué par l'acide acétique, l'acide citrique, l'acide lactique ou une combinaison de deux ou plusieurs de ceux-ci, ledit acide fournissant un pH compris dans la plage de 2 à 6, de préférence dans la plage de 3 à 5.

9. Composition alimentaire à phase aqueuse continue selon l'une quelconque des revendications précédentes, étant une pâte à tartiner ayant un goût grillé et des gouttelettes d'huile stables, les gouttelettes d'huile ayant une taille moyenne pondérée en volume comprise entre 2 et 10 µm, de préférence entre 3 et 8 µm, mesurée par ¹H-RMN.

10. Composition alimentaire à phase aqueuse continue selon l'une quelconque des revendications précédentes, comprenant :
a) 25 à 60 % en poids, par rapport au poids de la composition, d'eau
b) 10 à 35 % en poids, par rapport au poids de la composition, de graines de tournesol crues et broyées,
c) 5 à 15 % en poids, par rapport au poids de la composition, de graines de tournesol grillé et broyées,
d) 15 à 50 % en poids, par rapport au poids de la composition, d'huile alimentaire.

11. Composition alimentaire à phase aqueuse continue selon l'une quelconque des revendications précédentes pouvant être obtenue par un procédé comprenant l'étape de mélange de 5 à 50 % en poids de graines de tournesol crues et broyées et de 2 à 25 % en poids de graines de tournesol grillées et broyées avec 15- 80 % en poids d'eau et éventuellement 2 à 80 % en poids.

12. Procédé de préparation d'une composition alimentaire à phase aqueuse continue selon l'une quelconque des revendications 1 à 7, comprenant les étapes consistant à :
i) broyer 5 à 50 % en poids de graines de tournesol crues et 2 à 25 % en poids de graines de tournesol grillées,
ii) mélanger les graines de tournesol broyées de l'étape i) avec 15 à 80 % en poids d'eau, pour fournir une dispersion de graines de tournesol broyées et de graines de tournesol grillées dans de l'eau,
iii) ajouter éventuellement 2 à 80 % en poids d'huile avant ou après l'étape i) ou ii)).

13. Procédé selon la revendication 12, **caractérisé en ce que** l'étape ii) et/ou l'étape iii) est réalisée simultanément à l'étape i).

14. Procédé selon la revendication 12 ou la revendication 13, dans lequel l'étape i) est réalisée à une température comprise entre 15 et 105°C, de préférence entre 15 et 35°C.

15. Utilisation de graines de tournesol broyées, crues et grillées comme structurant pour des compositions alimentaires à phase aqueuse continue.
